(19)

Europäisches
Patentamt
European
Patent Office
Office européen
des brevets

(11)    **EP 2 610 811 A1**

(12)    **EUROPEAN PATENT APPLICATION**

(43) Date of publication:
**03.07.2013 Bulletin 2013/27**

(51) Int Cl.:
***G06Q 40/02*** *(2012.01)*

(21) Application number: **12199780.3**

(22) Date of filing: **28.12.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **29.12.2011 US 201161581431 P
29.12.2011 US 201161581502 P**

(71) Applicant: **Equifax, Inc.
Atlanta, GA 30309 (US)**

(72) Inventors:
• **O'Connor, Martin
Waleska, GA 30183 (US)**
• **Zhu, Qianqiu
Alpharetta, GA 30005 (US)**
• **Richard, Daniel
Mableton, GA 30126 (US)**

(74) Representative: **Kinsler, Maureen Catherine
Marks & Clerk LLP
Aurora
120 Bothwell Street
Glasgow
G2 7JS (GB)**

(54)    **Determining a personalized fusion score**

(57)    Various embodiments of the present invention provide systems and methods for determining a personalized fusion score. In certain embodiments, the systems and methods are configured for calculating preliminary fused scores for consumers at least in part by applying a first score fusion technique across the sample of consumer data. Segmentation scores are then calculated based at least in part upon the preliminary fused scores. In those and other embodiments, the segmentation scores enable creation of a plurality of cluster subsets within the sample of consumer data. In certain embodiments cluster subsets are defined at least in part by a particular score mix, while in other embodiments subsets are defined at least in part by respective score fusion techniques that prove optimal for each subset. Further, in various embodiments, application of multiple score fusion techniques across respective cluster subsets provides personalized fusion scores for the consumers in each respective cluster subset.

FIGURE 2

**Description**

**CROSS-REFERENCE TO RELATED APPLICATIONS**

This application claims priority to and the benefit of U.S. Application Serial No. 61/581,431, entitled "Systems and Methods for Determining a Personalized Fusion Score" that was filed December 29, 2011, and U.S. Application Serial No. 61/581,502, entitled "Systems and Methods for Score Fusion Based on Gravitational Force" that was filed December 29, 2011; the entirety of both of which are hereby incorporated by reference herein.

**BACKGROUND**

Field of Invention

Various embodiments of the present invention relate generally to the field of financial scores, and more specifically, to systems and methods providing improved techniques for fusing multiple financial scores together in a more accurate and optimal, yet also generic and customized manner, so as to provide a personalized fusion score.

Description of Related Art

In financial markets, a variety of financial scores, such as credit risk scores, bankruptcy scores, and affordability scores, are oftentimes provided through the use of predictive models. These models convert patterns and trends in historical data into useable data representative of the financial risk or uncertainty associated with certain consumers and/or consumer groups. The process for creating a predictive model is generally accomplished by modeling the dynamics of the input data to predict the probability of future outcomes or behavior. Lenders, such as banks and credit card companies, typically use such financial scores to evaluate the potential risk of entering transactions, such as a loan, mortgage, or otherwise, with particularly identified individuals and/or groups of individuals or entities.
Because a multitude of parameters influence the financial risk associated, not only with each individual or entity, but also across identified groups as a whole, lenders oftentimes seek to combine multiple financial scores together to achieve a "fused score" that more efficiently and accurately gauges the potential risk of transacting with particularly defined individuals and/or groups of individuals or entities. Traditional approaches for combining multiple financial scores are commonly referred to as statistical "score fusion techniques." Various score fusion techniques exist, but many typically involve the use of statistical algorithms, such as linear or logistical regression, decision trees, and/or neural networks, to analyze an overall data set, or population segment. Dual matrix is another known approach; however, a challenge in adopting this approach is that if more than two scores are involved, the approach cannot be used without first performing a pre-fusion to reduce the number of score to two.
In addition, the dual matrix and other approaches often analyze a sizeable population, with a judgmental decision-making hierarchy based, for example, on undefined ranking of subsets to split the population. In other words such techniques, when employed, may be applied to the overall population segment being evaluated or refined for subsets identified and created therein. However, even where focusing upon population subsets, a single fusion technique is typically applied throughout application of the analytical model. Such approaches, while perhaps efficient in their simplicity, risk introducing inaccuracies and adversely impacting score performance due to unique characteristics that may exist between respective subsets within an overall population.
Accordingly, a need exists to provide a mechanism that provides greater flexibility so that optimal score fusion techniques may be identified from a variety of any known statistical score fusion techniques and used for respective subsets of an overall population segment. In many instances, such a multi-stage process results in a significant improvement in the accuracy and reliability of the fused scores, while providing a degree of personalization and customization so as to reflect the unique character of particular subsets within the overall population segment being evaluated.

**BRIEF SUMMARY**

Briefly, various embodiments of the present invention address the above needs and achieve other advantages by providing various methods, systems, and computer program products configured to determine a personalized fusion score value.
In accordance with various purposes of the various embodiments as described herein, a computer-implement method for determining a personalized fusion score is provided. The method comprises the steps of: (a) receiving a sample of consumer data stored in a memory, said sample of consumer data comprising a plurality of consumers; (b) calculating, via at least one computer processor, preliminary fused scores for at least two consumers in said sample of consumer data, said sample of consumer data comprising at least two predictive scores for said at least two consumers in said sample of consumer data, and said preliminary fused scores being calculated at least in part by applying a first score fusion technique to said at least two predictive scores for said at least two consumers in said sample of consumer data; (c) calculating, via the at least one computer processor, segmentation scores for said at least two consumers in said sample of consumer data, said segmentation scores being calculated based at least in part upon said preliminary fused scores; (d) creating, via the at least one computer processor, a plurality of cluster subsets within said sample of consumer data based on said segmentation scores, each of the plurality of cluster subsets comprising at least one of said at least two consumers in said sample of consumer data; (e) determining, via the at least one computer processor, an optimal score fusion technique for at least one of said plurality of cluster subsets, said optimal score fusion technique being determined independently from said first score fusion technique applied to said at least two predictive scores for said at least two consumers in said sample of consumer data; and (f) calculating, via the at least one computer processor, a personalized fusion score for at least one consumer in at least one of said plurality of cluster subsets, said personalized fusion score being calculated by applying said optimal fusion score technique to said at least two predictive scores for said at least one consumer in said at least one of said plurality of cluster subsets,

In further accordance with various purposes of the various embodiments as described herein, a system for determining a personalized fusion score value is provided. The system comprises one or more memory storage areas, and one or more computer processors that are configured to receive data stored in the one or more memory storage areas. The one or more computer processors are further configured for: calculating preliminary fused scores for at least two consumers in a sample of consumer data, said sample of consumer data comprising at least two predictive scores for said at least two consumers in said sample of consumer data, and said preliminary fused scores being calculated at least in part by applying a first score fusion technique to said at least two predictive scores for said at least two consumers in said sample of consumer data; calculating segmentation scores for said at least two consumers in said sample of consumer data, said segmentation scores being calculated based at least in part upon said preliminary fused scores; creating a plurality of cluster subsets within said sample of consumer data based on said segmentation scores, each of the plurality of cluster subsets comprising at least one of said at least two consumers in said sample of consumer data; determining an optimal score fusion technique for at least one of said plurality of cluster subsets, said optimal score fusion technique being determined independently from said first score fusion technique applied to said at least two predictive scores for said at least two consumers in said sample of consumer data; and calculating a personalized fusion score for at least one consumer in at least one of said plurality of cluster subsets, said personalized fusion score being calculated by applying said optimal fusion score technique to said at least two predictive scores for said at least one consumer in said at least one of said plurality of cluster subsets.

In still further accordance with various purposes of the various embodiments as described herein, a non-transitory computer program product is provided. The product comprises at least one computer-readable storage medium having computer-readable program code portions embodied therein. The computer-readable program code portions further comprise: an executable portion configured for calculating preliminary fused scores for at least two consumers in a sample of consumer data, said sample of consumer data comprising at least two predictive scores for said at least two consumers in said sample of consumer data, and said preliminary fused scores being calculated at least in part by applying a first score fusion technique to said at least two predictive scores for said at least two consumers in said sample of consumer data; an executable portion configured for calculating segmentation scores for said at least two consumers in said sample of consumer data, said segmentation scores being calculated based at least in part upon said preliminary fused scores; an executable portion configured for creating a plurality of cluster subsets within said sample of consumer data based on said segmentation scores, each of the plurality of cluster subsets comprising at least one of said at least two consumers in said sample of consumer data; an executable portion configured for determining an optimal score fusion technique for at least one of said plurality of cluster subsets, said optimal score fusion technique being determined independently from said first score fusion technique applied to said at least two predictive scores for said at least two consumers in said sample of consumer data; and an executable portion configured for calculating a personalized fusion score for at least one consumer in at least one of said plurality of cluster subsets, said personalized fusion score being calculated by applying said optimal fusion score technique to said at least two predictive scores for said at least one consumer in said at least one of said plurality of cluster subsets.

## BRIEF DESCRIPTION OF THE SEVERAL VIEWS OF THE DRAWING(S)

Having thus described various embodiments of the invention in general terms, reference will now be made to the accompanying drawings, which are not necessarily drawn to scale, and wherein:

Figure 1 is a flowchart illustrating a process to determine a personalized fusion score according to various embodiments;
Figure 2 is a flowchart illustrating a process to determine a segmentation score according to various embodiments;
Figure 3 is a schematic block diagram illustrating a personalized fusion score system according to various embodiments;
Figure 4 is a schematic block diagram of the interactions between the consumer score fusion module, the cluster analysis module, and the cluster fusion module according to various embodiments;
Figure 5 is a flow diagram of steps executed by the consumer score fusion module according to various embodiments;
Figure 6 is a flow diagram of steps executed by the cluster analysis module according to various embodiments; and
Figure 7 is a flow diagram of steps executed by the cluster fusion module according to various embodiments.

## DETAILED DESCRIPTION OF VARIOUS EMBODIMENTS

Various embodiments of the present invention now will be described more fully hereinafter with reference to the accompanying drawings, in which some, but not all embodiments of the invention are shown. Indeed, embodiments of the invention may be embodied in many different forms and should not be construed as limited to the embodiments set forth herein. Rather, these embodiments are provided so that this disclosure will satisfy applicable legal requirements. The term "or" is used herein in both the alternative and conjunctive sense, unless otherwise indicated. The terms "illustrative," "example," and "exemplary" are used to be examples with no indication of quality level. Like numbers refer to like elements throughout.

_Methods, Apparatuses. Systems, and Computer Program Products_

As should be appreciated, various embodiments may be implemented in various ways, including as methods, apparatus, systems, or computer program products. Accordingly, the embodiments may take the form of an entirely hardware embodiment or an embodiment in which a processor is programmed to perform certain steps. Furthermore, various implementations may take the form of a computer program product on a computer-readable storage medium having computer-readable program instructions (e.g., computer software) embodied in the storage medium. More particularly, the present invention may take the form of web-implemented computer software. Any suitable computer-readable storage medium may be utilized including hard disks, CD-ROMs, DVD-ROMs, USB flash drives, optical storage devices, or magnetic storage devices.

Various embodiments are described below with reference to block diagrams and flowchart illustrations of methods, apparatuses (e.g., systems) and computer program products. It should be understood that each block of the block diagrams and flowchart illustrations, respectively, may be implemented in part by computer program instructions, e.g., as logical steps or operations executing on a processor in a computing system. These computer program instructions may be loaded onto a computer, such as a special purpose computer or other programmable data processing apparatus to produce a specifically-configured machine, such that the instructions which execute on the computer or other programmable data processing apparatus implement the functions specified in the flowchart block or blocks.

These computer program instructions may also be stored in a computer-readable memory that can direct a computer or other programmable data processing apparatus to function in a particular manner, such that the instructions stored in the computer-readable memory produce an article of manufacture including computer-readable instructions for implementing the functionality specified in the flowchart block or blocks. The computer program instructions may also be loaded onto a computer or other programmable data processing apparatus to cause a series of operational steps to be performed on the computer or other programmable apparatus to produce a computer-implemented process such that the instructions that execute on the computer or other programmable apparatus provide operations for implementing the functions specified in the flowchart block or blocks.

Accordingly, blocks of the block diagrams and flowchart illustrations support various combinations for performing the specified functions, combinations of operations for performing the specified functions and program instructions for performing the specified functions. It should also be understood that each block of the block diagrams and flowchart illustrations, and combinations of blocks in the block diagrams and flowchart illustrations, could be implemented by special purpose hardware-based computer systems that perform the specified functions or operations, or combinations of special purpose hardware and computer instructions.

_Exemplary Personalized Score Fusion Process_

Various embodiments of the present invention provide systems and methods for determining a personalized fusion score. For instance, particular embodiments provide improved techniques for fusing multiple financial scores together in a more accurate and optimal, yet also generic and customized manner so as to provide a personalized fusion score. Such embodiments involve: (1) applying a single score fusion technique to perform a preliminary fusion of scores for individuals across a population segment and determining a segmentation score for each individual in the population segment; (2) applying a model to the segmentation scores to create optimal clusters within the population segment for further fusion analysis; (3) applying an optimal one of any of a variety of score fusion techniques for each individual in each created cluster; and (4) outputting a personalized fusion score for each individual in each created cluster by utilizing the model.

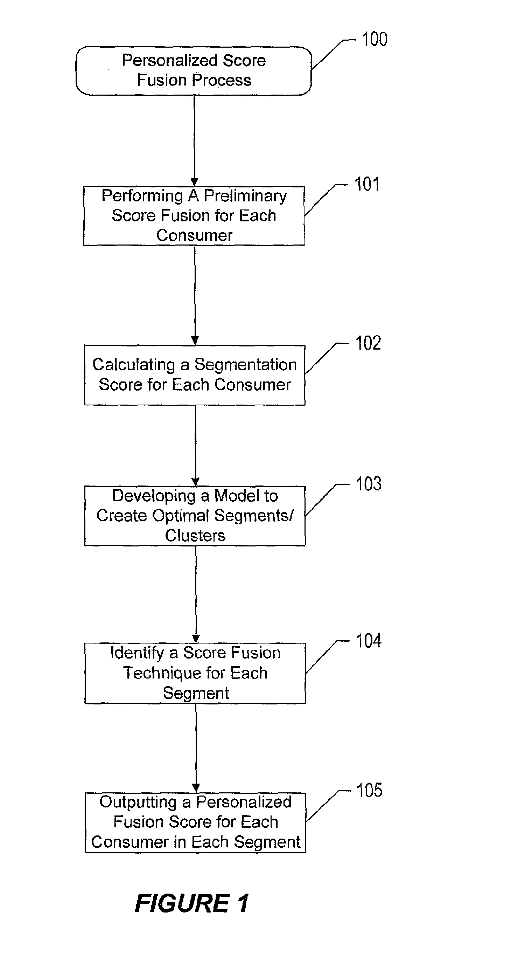

As shown in Figure 1, an exemplary personalized score fusion process **100** according to various embodiments of the invention may begin with performing a preliminary consumer score fusion and calculating a segmentation score for each consumer of a particular population segment of interest, shown as Steps **101** and **102.** The population segment of interest may be identified according to various techniques. For instance, as is typical in many predictive modeling initiatives, one embodiment may involve defining an analysis population in line with the business for conducting the analysis (e.g., population segment of interest). For example, if a bank (Bank A) wants to build an account management model for its consumer bankcard portfolio, the analysis population may be all consumers with at least one existing bankcard at Bank A. However, often in practice, the actual analysis may focus on a certain timeframe, instead of using the entire timeframe that is available. Thus, in particular embodiments, the population segment of interest may include a random sample of consumers, whereas in other embodiments, the sample may include consumers of interest (e.g., those of a specific group) to the party (e.g., lender) who will utilize the model.

In addition, as mentioned, in particular embodiments the period of time over which the consumers are identified may vary as well. For instance, in at least one embodiment, the sample may encompass quarterly samples of credit-related data taken over a five-year period, while in other embodiments, the sample may encompass monthly samples of bankruptcy-related data taken over a ten-year period. Thus, in any of these and still other embodiments, the sample of consumers used to identify the population segment of interest may comprise any number of observation points, over any of a variety of time periods.

Finally, it should be noted that the sample of consumers may be obtained from one or more of a variety of sources, according to various embodiments. For instance, the sample may be obtained from any of the credit reporting agencies that make up a part of the credit bureaus or an organization, such as a lender, may simply collect credit, bankruptcy, or other financial-related data themselves over a time period and store such in a database or data warehouse. Indeed, as should be apparent to one of ordinary skill in the art, a sample of consumers may be collected, stored, obtained, and/or provided according to the various embodiments described herein, in any of a variety of many different ways.

From this identified population segment of interest, data may be gather on each individual and used as input to one or more predictive models. Thus, in Step **101**, the process may involve obtaining at least two scores from one or more predictive models for each particular consumer in the population segment of interest. For instance, returning to the example involving Bank A, the process may involve obtaining a credit score, a bankruptcy score, and an affordability score for each consumer of the population segment.

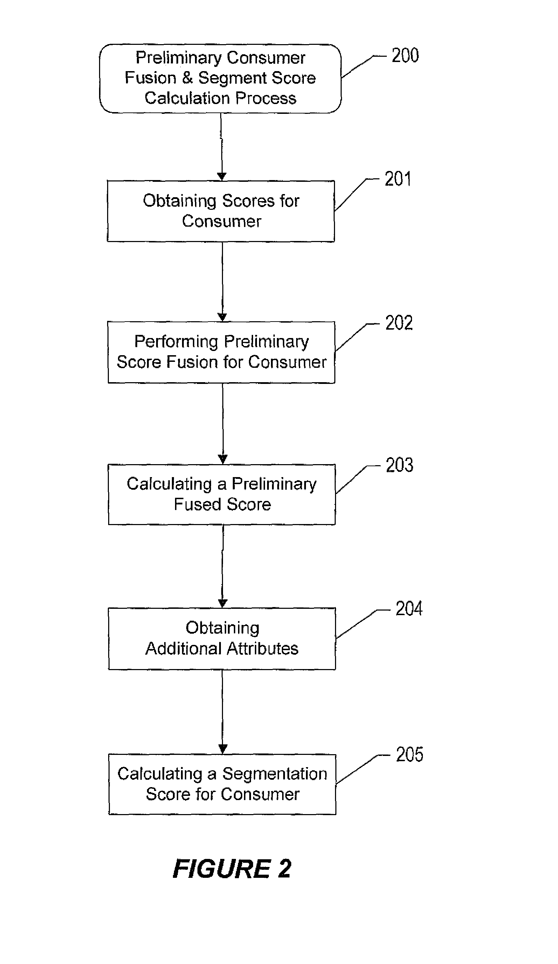

Turning now to Figure 2, a segmentation score is determined for each consumer of the population segment of interest based on a preliminary consumer score fusion and segmentation score calculation process **200**. The first step in performing the preliminary consumer score fusion, according to certain embodiments, involves obtaining the scores to be fused for a particular consumer, shown as Step **201**. The reason why, in many situations, one may wish to fuse multiple scores from different predictive models is because each model applies to a different dimension of behavior that is relevant to the final solution. Thus, in Step **202**, a preliminary score fusion is performed upon the scores obtained for the individual to arrive at a preliminary fused score for the individual. It should be understood that any of a variety of fusion techniques, as commonly known and used in the art, may be used to perform the preliminary score fusion. However, according to various embodiments, a single fusion technique is generally chosen and applied across the entire population segment of interest. That is, particular embodiments of the process involve applying the same fusion technique to each consumer of the population segment. Thus, turning now to Step **203**, a preliminary fused score for the individual is calculated. It should be understood that the preliminary fused score for the individual may be calculated in any of a variety of ways, as commonly known and understood in the art to be feasible.

In Step **204**, according to various embodiments, data related to one or more additional attributes for the consumer is obtained. For instance, particular embodiments may involve obtaining attributes based on geography, demographic, personal, and/or financial information for the consumer. In certain embodiments, the information for the additional attributes may be concurrent with that for which the sample of consumers was collected; however, in other embodiments, as may be desirable for a particular application, the information may be prior to that associated with the sample of consumers previously described herein.

According to various embodiments, the process continues with using the fused score and the additional attributes to calculate a segmentation score for the individual, shown as Step **205**. As discussed in further detail below, this particular step of the process may involve in particular embodiments, inputting the fused scored and additional attributes into to a statistical model such as, for example, a logistic regression, decision tree, neural network, or other advanced method. However, it should be understood that other embodiments may employ alternatively configured statistical techniques and models as may be desirable or necessary for a particular application. In various embodiments, the process shown in Figure 2 is performed for each consumer in the population segment of interest. Thus, as a result, a segmentation score is calculated for each consumer.

Returning to Figure 1, at Step **103** a model is developed to create optimal segments (e.g., clusters) of consumers based on the segmentation scores calculated in Step **102** for each consumer. Optimal segments/clusters are identified, according to various embodiments, by (**1**) differentiating the score mix between respective clusters; and/or (2) differentiating the optimal score fusion technique (for forming the model) between respective clusters. As previously described herein, various embodiments may involve the user of any of a variety of clustering techniques such as, for example, decision tree or customer techniques, such as K-means. In various embodiments, the key is how the resulting clusters are evaluated. For instance, in particular embodiments, the clusters need to be judged according to the fused output within each cluster. For example, different clusters may be warranted when the fused score mix for the consumers in the cluster is different from one cluster to the next, or the best fusion technique is different from one cluster to the next. Thus, in particular embodiments, when score mixes and/or score fusion techniques differ between two respective clusters, the process finalizes the identified clusters and identifies a score fusion technique for each cluster, as shown in Step **104**.

In any of these and other embodiments, as will be described in further detail below, selection and application of a particularly optimal score fusion technique for respective clusters in Step **104** may be wholly independent of the score fusion technique initially applied to the entire population segment during Steps **101** and **102**. In this manner, the efficiency and accuracy of the personalized fusion score according to certain embodiments is maximized, as compared to, for example incumbent benchmark models, which are limited to a single score fusion technique during all stages of analysis. Indeed, as each score fusion technique may be unique to a particular cluster, the contribution of various items of consumer data may vary, in certain embodiments, according to the relevance afforded to such by each score fusion technique. For example, when fusing a credit risk score with a bankruptcy score and an affordability score, according to various embodiments, in certain clusters credit risk might be dominant, while in others affordability or bankruptcy might dominate. As such, the personalized score fusion score output in Step **105** represents an optimal combination of scores through the incorporation of multiple techniques for score fusion, as may be desired for a particular application.

*Exemplary Personalized Score Fusion System Architecture*

The personalized score fusion system may include various mechanisms configured to perform one or more functions in accordance with various embodiments of the present invention. In various embodiments, the personalized score fusion system may be incorporated into a computer system of an organization, such as a credit reporting agency or a lender, in any of a variety of ways. In certain embodiments, the personalized score fusion system may be connected to a legacy server via a network (e.g., a LAN, the Internet or private network), whereas in another embodiment, the system may be a stand-alone server. The personalized score fusion system may also, according to various embodiments, receive or access data and communicate in various ways. As a non-limiting example, in certain embodiments the data may be entered directly into the system either manually or via a network connection while in other embodiments the data may be received or accessed by communicating either to a local or remote system such as a database, data warehouse, data system, other module, file, storage device, or the like.

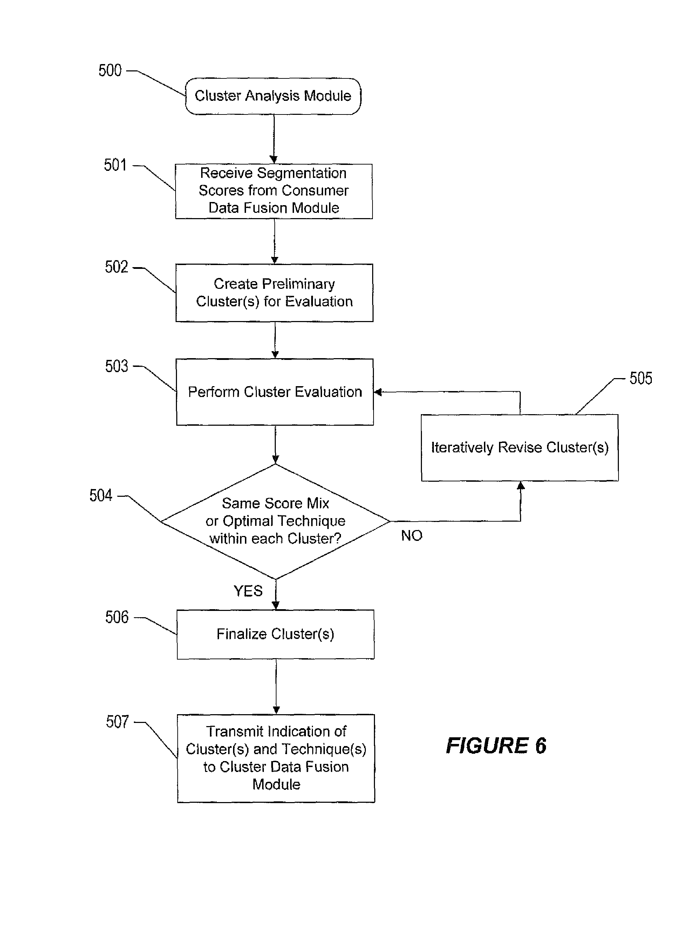

Figure 6 shows a schematic diagram of a personalized score fusion system **300** according to various embodiments. In certain embodiments, the personalized score fusion system **300** includes a processor **330** that communicates with other elements within the computer system via a system interface or bus **335**. Also included in the system **300** is a display device/input device **350**, which may according to certain embodiments be configured for receiving and displaying data. This display device/input device **350** may be, for example, a keyboard or pointing device that is used in combination with a monitor. The system **300** may, in various embodiments, further include memory **310**, which may include both read only memory (ROM) **314** and random access memory (RAM) **312**. In certain embodiments, the system's ROM **314** may be used to store a basic input/output system **316** (BIOS) containing the basic routines that help to transfer information between elements within the system **300**. In other embodiments, the system **300** may operate on one computer or on multiple computers that are networked together.

In addition, the personalized fusion score system **300** may according to various embodiments include at least one storage device **320**, such as a hard disk drive, a floppy disk drive, a CD ROM drive, a DVD ROM drive, a USB flash drive, an optical disk drive, or the like for storing information on various computer-readable media, such as a hard disk, a removable magnetic disk, a CD-ROM disc, a DVD-ROM disc, or the like. As will be appreciated by one of ordinary skill in the art, each of the one or more storage devices **320** may be connected to the system bus **335** by an appropriate interface. In this manner, according to various embodiments, the storage devices **320** and their associated computer-readable media provide nonvolatile storage capabilities. It is important to note that the computer-readable media described above could be replaced by any other type of computer-readable media known in the art or known and understood to be a feasible alternative therefor. Such media could include the non-limiting examples of magnetic cassettes, flash memory cards, digital video disks, and Bernoulli cartridges.

Also located within the personalized fusion score system **300** is a network **360**, which may be configured according to various embodiments for interfacing and communicating via a network **370** (e.g., Internet or private network, or otherwise) with other elements of a computer network, such as a remote user system **380**. Of course, it should be appreciated by one of ordinary skill in the art that one or more of the system **300** components may be located geographically remotely from one or more of the remaining system **300** components, as may be desirable or even necessary for a particular application. Furthermore, one or more of the components may be combined, and additional components performing functions described herein may be included in the system **300**.

Remaining with Figure 6, according to various embodiments of the present invention, the one or more networks **380** may be further configured for supporting communication in accordance with any one or more of a number of second-generation (2G), 2.5G, third-generation (3G), and/or fourth-generation (4G) mobile communication protocols, or the like. More particularly, the one or more networks **380** may be capable of supporting communication in accordance with 2G wireless communication protocols IS-136 (TDMA), GSM, and IS-95 (CDMA). Also, for example, the one or more networks **380** may be capable of supporting communication in accordance with 2.5G wireless communication protocols GPRS, Enhanced Data GSM Environment (EDGE), or the like. In addition, for example, the one or more networks **380** may be capable of supporting communication in accordance with 3G wireless communication protocols such as Universal Mobile Telephone System (UMTS) network employing Wideband Code Division Multiple Access (WCDMA) radio access technology. Some narrow-band AMPS (NAMPS), as well as TACS, network(s) may also benefit from embodiments of the present invention, as should dual or higher mode mobile stations (e.g., digital/analog or TDMA/CDMA/analog phones). As yet another example, one or more of the components of the system **300** may be configured to communicate with one another in accordance with techniques such as, for example, radio frequency (RF), Bluetooth™, infrared (IrDA), or any of a number of different wired or wireless networking techniques, including a wired or wireless Personal Area Network (PAN), Local Area Network (LAN), Metropolitan Area Network (MAN), Wide Area Network (WAN), or the like.

While the foregoing describes a single processor **330**, as one of ordinary skill in the art will recognize, the personalized fusion score system **300** may comprise multiple processors operating in conjunction with one another to perform the functionality described herein. In addition to the memory **310**, the processor **330** can also be connected to at least one interface or other devices capable of displaying, transmitting and/or receiving data, content or the like. In this regard, the interface(s) can include at least one communication interface or other devices for transmitting and/or receiving data, content or the like, as well as one or more user interface that can include a display and/or a user input interface. The user input interface, in turn, can comprise any of a number of devices allowing the entity to receive data from a user, such as a keypad, a touch display, a joystick or other input device.

Additionally, while reference is made generally to a personalized fusion score system **300**, as one of ordinary skill in the art will recognize, embodiments of the present invention are not limited to a client-server architecture. The system of embodiments of the present invention is further not limited to a single server, or similar network entity or mainframe computer system. Other similar architectures including one or more network entities operating in conjunction with one another to provide the functionality described herein may likewise be used without departing from the spirit and scope of embodiments of the present invention. For example, a mesh network of two or more personal computers (PCs), similar electronic devices, or handheld portable devices, collaborating with one another to provide the functionality described herein in association with or in replacement of the system **300** may likewise be used without departing from the spirit and scope of embodiments of the present invention.

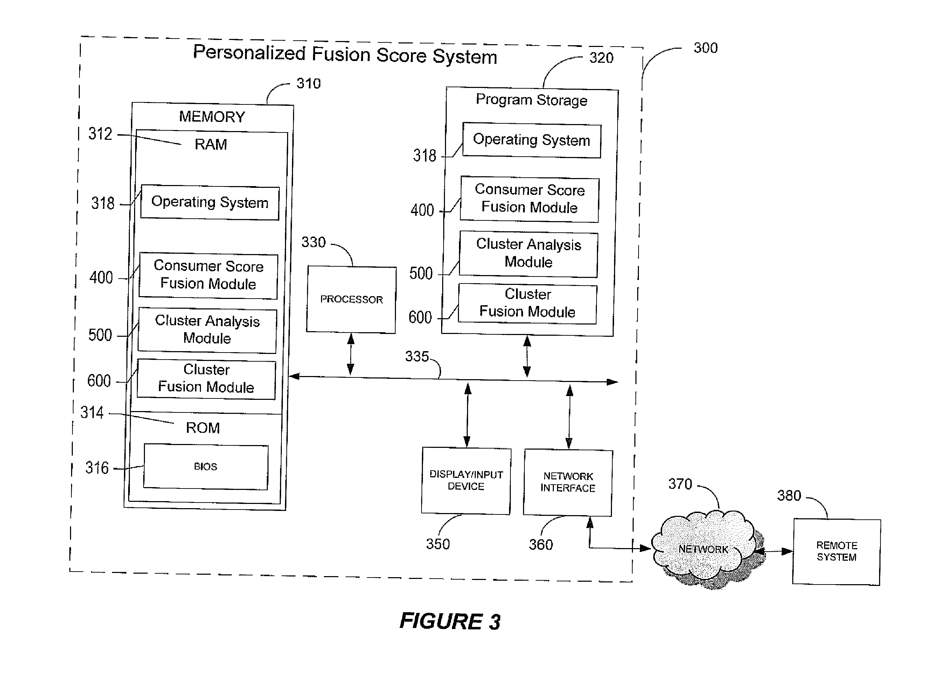

With further reference to Figure 3, it should be understood that according to various embodiments, a number of program modules may be stored by the various storage devices **320** and within RAM **312**. For example, as shown in Figure 3, such program modules of the personalized fusion score system **300** may include an operating system **318**, a consumer score fusion module **400**, a cluster analysis module **500**, and a cluster fusion module **600**. According to various embodiments, the consumer score fusion module **400**, the cluster analysis module **500**, and the cluster fusion module **600** control certain aspects of the operation of the personalized fusion score system **300**, as is described in more detail below, with the assistance of the processor **330** and the operating system **318**.

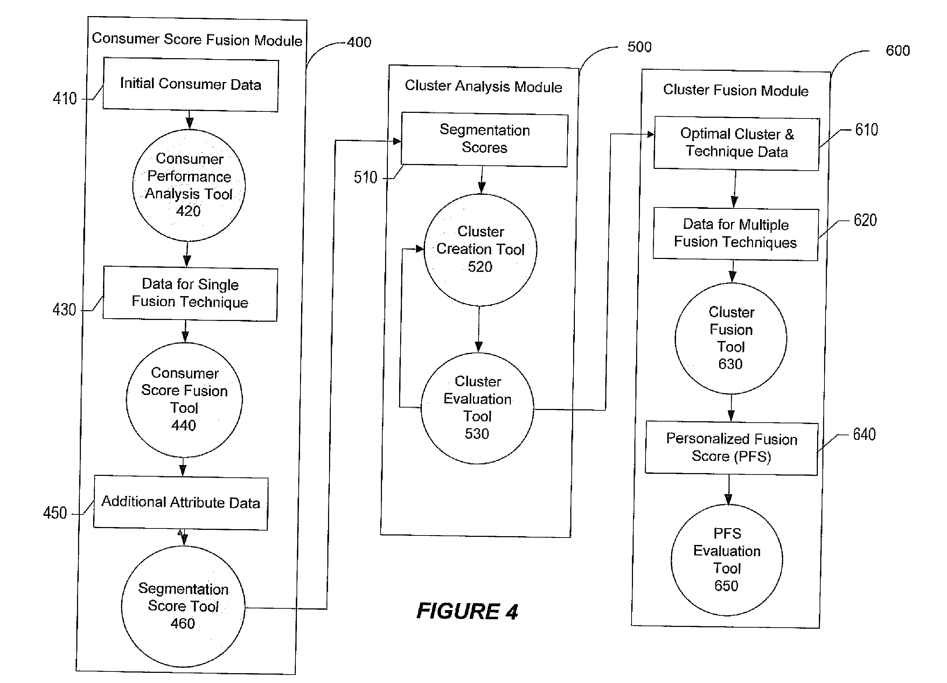

Figure 4 is a schematic block diagram of how each of the various modules that may be, according to various embodiments, stored by the storage devices **320** of the personalized fusion score system **300** interacts with one another. In various embodiments, the consumer score fusion module **400** is configured to receive and store consumer data **410** associated with a sample of consumer data, as will be described in more detail below. In certain embodiments, the consumer score fusion module **400** may be further configured to execute a performance analysis tool **420**, itself configured to analyze the consumer data **410** with a single selected fusion technique **430**, all of which will be described in more detail below.

In various embodiments, the consumer score fusion module **400** may be configured to obtain, receive, or store additional attributes and input the same, together with any data output from the score fusion tool **440**, into a segmentation score tool **460** for further analysis. In certain embodiments, the output from the score fusion tool **440** may comprise a preliminary fusion score (not shown in Figure 4), as will be described in further detail below. In these and still other embodiments, data comprising a segmentation score **510** may be output from the segmentation score tool **460**, as will likewise be described with reference to the cluster analysis module **510** immediately hereafter. It should be understood that in any such embodiments and still perhaps others, the score output by the segmentation score tool **460** represents a degree of predictive analysis, as commonly known and understood in the art of predictive modeling.

Remaining with Figure 4, in various embodiments, the cluster analysis module **500** is configured to receive segmentation score data **510** from the consumer score fusion module **400** and input the same into a cluster creation tool **520**. The cluster creation tool **520**, as will be described in further detail below, may be configured to create preliminary clusters (e.g., subsets) for formation within the overall population segment. Upon creation, the preliminary clusters are passed to a cluster evaluation tool **530**, also within the cluster analysis module **500** to assess various characteristics of the cluster, as will be described in further detail below. Upon cluster finalization, which may be based upon any of a variety of user or otherwise-defined parameters, the cluster evaluation tool **530**, may be configured to transmit data regarding the clusters (e.g., optimal cluster sets and/or optimal fusion techniques therefor, and the like), all as will be described in further detail below.

In various embodiments, the cluster fusion module **600** is configured to receive data regarding the clusters **610** (e.g., optimal cluster sets and/or optimal fusion techniques therefor, and the like) from the cluster analysis module **500**. Upon receipt thereof, the cluster fusion module **600** may be configured according to certain embodiments to select and execute an identified optimal fusion technique from data regarding various multiple fusion techniques **620** stored within the module. In these and other embodiments, the cluster fusion module **600** may comprise a cluster fusion tool **630** configured to at least execute the identified optimal fusion technique for each consumer in a respective cluster (as identified within cluster data **610**), all of which as will be described in further detail below. In various embodiments, a personalized fusion score **640** for each consumer is output from the cluster fusion tool **630**, which may in certain embodiments be further evaluated by a personalized fusion score evaluation tool **650**, all as illustrated in at least Figure 4.

In a particular embodiment, the various program modules **400**, **500**, and **600** may be executed by the personalized score fusion system **300** and are configured to generate graphical user interfaces accessible to users of the system **300**. In certain embodiments, the user interfaces may be accessible via one or more networks **370**, which may include the Internet or any of a variety of alternatively suitable communications networks, all as previously described herein. In other embodiments, one or more of the modules **400**, **500**, and **600** may be stored locally on one or more remote systems (e.g., terminals) **380** or the like, and may be executed by one or more processors of the system **380**. According to various embodiments, the modules **400**, **500**, and **600** may send data to, receive data from, and utilize data contained in, one or more databases, which may be comprised of one or more separate, linked and/or networked databases, as may be desirable or necessary for a particular application.

*Exemplary Consumer Score Fusion Module Logic*

According to various embodiments, the consumer score fusion module **400** is configured to receive and store at least initial consumer data **410**, data regarding at least one fusion technique **430**, and additional attribute data **450**. In certain embodiments, the consumer score fusion module **400** is configured to obtain predictive scores based upon the data **410** for a particular consumer, perform a score fusion on the predictive scores **410** to produce a fused score for the particular consumer, which may then be combined with the additional attribute data **450** so as to calculate a segmentation score **510** for the particular consumer.

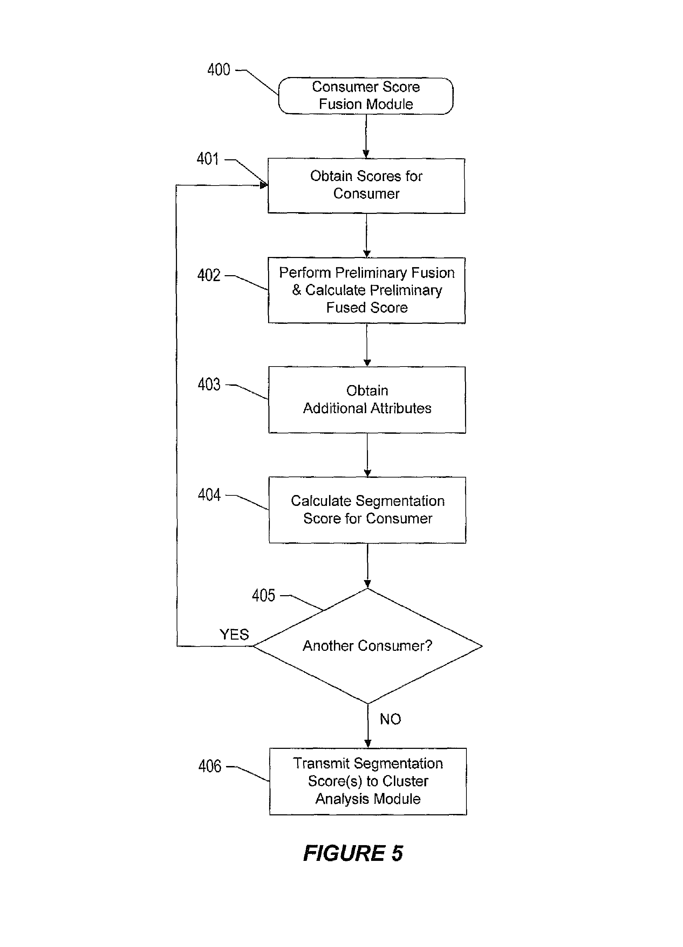

Thus, turning now to Figure 5, an example of a process flow that may be executed by the consumer score fusion module **400** is shown. In Step **401**, the process begins according to various embodiments with the module **400** receiving or otherwise obtaining predictive scores for a particular consumer. For instance, returning to the previous example, the module **400** receives a credit risk score, a bankruptcy score, and an affordability score for the particular consumer.

In Step **402**, according to various embodiments, a preliminary score fusion is performed upon the obtained scores. It should be understood that any of a variety of fusion techniques, as commonly known and used in the art, may be used in certain embodiments to perform the preliminary score fusion. In Step **402**, however, according to these and still other embodiments, a single fusion technique is first chosen for application in Step **402** across the entire sample of consumer data. That is, the same fusion technique is used to produce a fused score for each consumer in the sample of consumer data. Thus, as a result, a preliminary fused score is calculated for each consumer in the sample of consumer data.

During subsequent Step **403**, according to various embodiments, the module **400** obtains data related to one or more additional attributes for the consumer. For instance, particular embodiments may involve obtaining attributes based on geography, demographic, personal, and/or financial information for the consumer. In certain embodiments, the information for the additional attributes may be concurrent with that for which the sample of consumers was collected; however, in other embodiments, as may be desirable for a particular application, the information may be prior to that associated with the sample of consumers previously described herein.

According to various embodiments, the additional attributes may be utilized as independent attributes, along with the preliminary fused scored, for the statistical model used to calculate a segmentation score, as illustrated generally in Figure 5 as Step **404**. Such techniques, as previously described herein, may include any one of the non-limiting examples of logistical regression, decision trees, and/or neural networks. However, it should be understood that other embodiments may employ alternatively configured statistical techniques and models, including the non-limiting example of a linear regression algorithm, as may be desirable or necessary for a particular application.

Next, in Step **405**, the consumer score fusion module **400** determines whether additional consumers exist in the sample of consumer data. If so, the module **400** repeats the process described above for the next consumer. If not, the module **400** transmits the calculated segmentation scores for each consumer in Step **406** to the cluster analysis module **500** for further analysis and manipulation, as will be described in further detail below.

*Exemplary Cluster Analysis Module Logic*

According to various embodiments, the cluster analysis module **500** is configured to receive and store at least a segmentation score for each consumer from the consumer data fusion module **400**. Upon receipt, in certain embodiments, the cluster analysis module **500** then determines and creates a plurality of cluster subsets made up of one or more consumers from the sample of consumer data, such that each of the plurality of cluster subsets has an acceptable score mix therein and/or a single optimal fusion technique associated therewith, as will be described in further detail below.

Thus, turning now to Figure 6, an example of a process flow that may be executed by the cluster analysis module **500** is shown. In Step **501**, the process begins according to various embodiments with the cluster analysis module **500** receiving the segmentation score **510** for each consumer, as calculated during Step **406** of Figure 5, as previously described herein. In certain embodiments, together with the segmentation scores, the cluster analysis module **500** receives at least some portion of the initial consumer data **410** for further analysis in relation to the segmentation scores **510**.

Remaining with Figure 6, according to various embodiments, upon receipt of at least the segmentation scores **510**, the cluster analysis module **500** proceeds to Step **502**, in which the module **500** creates preliminary cluster subsets for further evaluation based upon the segmentation scores. Many techniques may be used in this step, in accordance with certain embodiments, such as the non-limiting examples of decision tree analysis or any of a variety of commonly known and understood clustering techniques, like K-means. In these and other embodiments, it should be understood that cluster analysis itself is not the application of one specific algorithm, but instead the iterative process of knowledge discovery that involves repetitious layers of trial and error, all aimed at the general task to be solved - the identification and creation of efficient and accurately defined cluster subsets.

In this regard, according to various embodiments, the cluster analysis module **500** is configured during subsequent Step **503** to iteratively evaluate the potential cluster subsets identified and (at least preliminarily) created during Step **502**. Generally speaking, in various embodiments, cluster subsets are evaluated or judged based upon fused characteristics within each cluster. In certain embodiments, the characteristics for evaluation may include the non-limiting examples of one or more of a fused score mix within each respective cluster, an optimal or preferred fusion technique for each respective cluster, and/or various combinations of the same and the like. In these and still other embodiments, the cluster subsets may be internally evaluated against themselves, while in still other embodiments, the clusters may be evaluated against one another, assessing, for example, particular differences in score distributions and/or optimal fusion techniques, as between respective clusters.

In various embodiments, the cluster analysis module **500** may be configured in Step **504** to assess each respective cluster subset by evaluating whether substantially the same score mix exists or a single fusion technique is optimal within each identified cluster. In certain embodiments, to perform the iterative cluster revision, as previously referenced herein, the cluster analysis module **500** may execute a cluster evaluation tool **530** (see Figure 4), to repeatedly assess the clusters against one another. In at least one embodiment, the cluster evaluation tool **530** may be configured to assess differences in score mixes and/or optimal fusion techniques, as between two or more clusters, as identified in Step **502**. As a non-limiting example, where the fused score mix is sufficiently different, whether based upon a predetermined user threshold therefore or otherwise, or where the best (e.g., optimal) fusion technique is different from one cluster to the next, the cluster evaluation tool **530** may proceed to Step **506** to finalize the clusters for further manipulation, as may be desirable for a particular application. However, it should be understood that by Step **506**, as illustrated in at least Figure 6, the iterative process of cluster creation and evaluation is complete according to various embodiments.

Continuing with reference to Figure 6, it should be understood that if, during Step **504**, the cluster analysis module **500** determines that the same score mix or optimal fusion technique does not exist across a respective cluster, or alternatively that sufficiently different score mixes or optimal score fusion techniques do not exist between two or more respective clusters, an iterative process, illustrated generally as Step **505** may occur according to various embodiments. In at least the illustrated embodiments, execution of Step **505** returns the cluster analysis module **500**, to Step **503**, during which the cluster evaluation tool **530** (see Figure 4) may further evaluate the usefulness of the preliminarily created clusters.

In certain embodiments, execution of Step **505** may alternatively, or in conjunction with the above description, return to Step **502**, during which at least a portion of the clusters identified as improperly grouped based upon observed characteristics may be recreated. In at least one embodiment, such recreation involves either the addition or removal of certain consumers within the cluster(s) from one cluster subset to another. In still other embodiments, such recreation may involve a complete restructuring of one or more of the cluster subsets previously created in Step **502**.

In any of the above described various embodiments and still other embodiments, it should be understood that upon completion of Step **506** of Figure 6, the clusters subsets are sufficiently evaluated and finalized for the cluster analysis module **500** to transmit information regarding the same to the cluster data fusion module **600**, as will be described in further detail below. In certain embodiments, the cluster analysis module **500** in Step **507** is configured in this regard so as to transmit an indication of not only the identified cluster subsets to the cluster fusion module **600**, but also an indication of the optimal fusion technique identified for each of the same, so as to enable the module **600** to perform the cluster fusion process, as will be described in further detail below. It should be understood that in other embodiments, the module **500** may transmit any of a variety of data to the cluster fusion module **600**, provided such is sufficient to enable subsequent score fusion analysis, as may be desirable for a particular application.

*Exemplary Cluster Fusion Module Logic*

According to various embodiments, the cluster fusion module **600** is configured to receive and store at least an indication of cluster subsets and, in certain embodiments, an indication of an optimal fusion technique for application thereon. Upon receipt, in certain embodiments, the cluster fusion module **600** performs the optimal fusion technique for each cluster, thereby outputting a personalized fusion score **640** (see Figure 4), all of which will be described in further detail below.

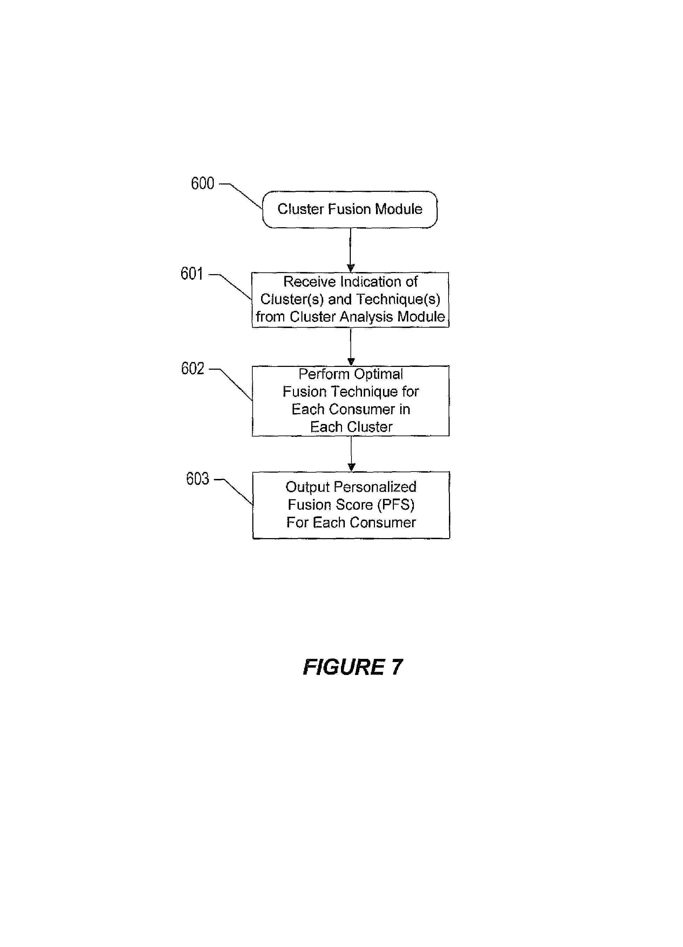

Thus, turning now to Figure 7, an example of a process flow that may be executed by the cluster fusion module **600** is shown. In Step **601**, the process begins according to various embodiments with the cluster fusion module **600** receiving (e.g., from the cluster analysis module **500**) an indication of the finalized clusters (as identified as previously described herein with reference to at least Figure 6) and/or an optimal score fusion technique for each of the same. In certain embodiments, the module **600** may be configured to passively await receipt of the above-described data, while in other embodiments the module **600** may periodically query the cluster analysis module **500** for data, as may be desirable for a particular application.

Remaining with Figure 7, according to various embodiments, upon receipt of respective cluster data and associated fusion technique(s), the cluster fusion module **600** proceeds to Step **602**, during which the module **600** applies the score fusion techniques identified for a particular cluster to the original scores collected for least one consumer in the particular cluster. For instance, returning to the example in which a credit risk score, a bankruptcy score, and an affordability score are obtained for each consumer, the module **600** applies the particular fusion technique identified for the cluster to the three scores for a particular consumer in the cluster in order to produce a fused score for the particular customer. According to various embodiments, different score fusion techniques (e.g., those identified as optimal for respective clusters, as has been previously described herein) are applied for different ones of the respective clusters. As previously described herein, various embodiments may incorporate any of a variety of score fusion techniques for execution by, for example, the cluster fusion tool **630**, as shown in Figure 4. Such score fusion techniques as may be applied in certain embodiments during Step **602** include the non-limiting examples of logistical regression, linear regression, non-linear regression, decision trees, neural networks, and the like. However, it should be understood, that regardless of the particular score fusion technique applied, such is chosen based upon a predetermination that such is optimal for a particular cluster, as has been previously described herein. Still further, multiple score fusion techniques may be applied across multiple clusters, in contrast with certain prior art methods that require application of a single score fusion technique across the entire population segment.

Proceeding now to Step **603**, as illustrated in at least Figure 7, it may be seen that the output of Step **602**, whether executed by a tool analogous to that of the cluster fusion tool **630** of Figure 4 or otherwise, is according to various embodiments, a personalized fusion score **640** (see also Figure 4). Given the application of multiple fusion techniques during Step **602**, the score **640** achieved in Step **603** in various embodiments represents an improvement in accuracy, performance, and/or customization than otherwise available through previous models in this regard. In any of these and other embodiments, the cluster fusion module **600** may be configured to output the personalized fusion score **640** for particular consumers visually to the user, for example via a display or input device **350**, as has been previously described herein. Of course, in still other embodiments, the module **600** may be configured to otherwise communicate and/or transmit the personalized fusion score **640**, as may be desirable for a particular application and further end-use thereof.

*Exemplary Process for Devaluating a Personalized Fusion Score*

In various situations, a party may wish to assess the performance of the score fusion process, as previously described herein. In such instances, certain measurements may be used to compare an achieved performance to an incumbent benchmark solution. Non-limiting examples thereof, include: (a) using a Kolmogorav-Smirnov (KS) Statistic and a GINI coefficient to measure the amount of separation the personalized fusion score provides when ranking good versus bad items in the score distribution; (b) assessing the interval of bad rates to ensure a monotonically increasing interval bad rate when moving from low risk scoring percentiles to high risk scoring percentiles; and (c) evaluating the effectiveness of the bottom-scoring ranges in capturing incidence and dollar losses, where a strong model should capture a significant portion of bad rates in the bottom-scoring percentiles and fewer in the top-scoring percentiles.

As a further example, in particular instances where the KS Statistic is utilized to measure the degree of separation, the KS should be considered equal to the maximum difference between the cumulative percentages of good rates and bad rates across all score values, as follows:

$$KS \equiv \max_{\substack{over\ all\ score \\ values\ S}} \left[ \frac{N_{goods\ for\ score \leq S}}{N_{total\ goods}} - \frac{N_{bads\ for\ score \leq S}}{N_{total\ bads}} \right],$$

where $N_{goods\ for\ scorer \leq S}$ and $N_{bads\ for\ score \leq s}$ are the cumulative numbers of good and bad rates with scores $\leq S$; $N_{total\ goods}$ and $N_{total}$ bads are the total numbers of good and bad rates in the sample, respectively. KS Statistic values generally range from 0 to 100 and serve as a valuable index regarding the degree of separation between two groups (e.g., default versus non-default, payment versus nonpayment, and the like). The higher the KS Statistical value, the better the ability of the model to discriminate between the two groups, and thus the better the personalized fusion score. Generally speaking, of course, the KS Statistical value should always be compared to an incumbent benchmark score, whether a generic model or otherwise, to fully assess the quality of the personalized fusion score.

*Conclusion*

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

**Claims**

1. A computer-implemented method for determining a personalized fusion score, said method comprising the steps of:

(a) receiving a sample of consumer data stored in a memory, said sample of consumer data comprising a plurality of consumers;
(b) calculating, via at least one computer processor, preliminary fused scores for at least two consumers in said sample of consumer data, said sample of consumer data comprising at least two predictive scores for said at least two consumers in said sample of consumer data, and said preliminary fused scores being calculated at least in part by applying a first score fusion technique to said at least two predictive scores for said at least two consumers in said sample of consumer data;
(c) calculating, via the at least one computer processor, segmentation scores for said at least two consumers in said sample of consumer data, said segmentation scores being calculated based at least in part upon said preliminary fused scores;
(d) creating, via the at least one computer processor, a plurality of cluster subsets within said sample of consumer data based on said segmentation scores, each of the plurality of cluster subsets comprising at least one of said at least two consumers in said sample of consumer data;
(e) determining, via the at least one computer processor, an optimal score fusion technique for at least one of said plurality of cluster subsets, said optimal score fusion technique being determined independently from said first score fusion technique applied to said at least two predictive scores for said at least two consumers in said sample of consumer data; and
(f) calculating, via the at least one computer processor, a personalized fusion score for at least one consumer in at least one of said plurality of cluster subsets, said personalized fusion score being calculated by applying said optimal fusion score technique to said at least two predictive scores for said at least one consumer in said at least one of said plurality of cluster subsets.

2. The computer-implemented method of Claim 1, wherein the step of creating the plurality of cluster subsets within said sample of consumer data further comprises determining, via the at least one computer processor, whether sufficiently distinct score mixes exists between at least two of the plurality of cluster subsets.

3. The computer-implemented method of Claim 1, further comprising, when said sufficiently distinct score mixes do not exist between two or more of the plurality of cluster subsets, the step of redistributing, via the at least one computer processor, one or more of the plurality of cluster subsets within said sample of consumer data.

4. The computer-implemented method of Claim 1, wherein the step of creating the plurality of cluster subsets within said sample of consumer data further comprises determining, via the at least one computer processor, whether sufficiently distinct optimal score fusion techniques exist between at least two of the plurality of cluster subsets.

5. The computer-implemented method of Claim 4, further comprising, when said sufficiently distinct optimal statistical techniques do not exist between two or more of the plurality of cluster subsets, the step of redistributing, via the at least one computer processor, one or more of the plurality of cluster subsets within said sample of consumer data.

6. The computer-implemented method of Claim 1, further comprising the step of, via the at least one computer processor, assessing a performance rating of the personalized fusion score at least by comparing the personalized fusion score to an incumbent benchmark solution.

7. The computer-implemented method of Claim 1, wherein the step of calculating said segmentation scores for the at least two consumers further comprises the sub-steps of:

retrieving additional attributes for said at least two consumers in said sample of consumer data; and
applying the first score fusion technique to the preliminary fused scores and the additional attributes for said at least two consumers in said sample of consumer data to calculate said segmentation scores for said at least two consumers in said sample of consumer data.

8. The computer-implemented method of Claim 7, wherein the additional attributes for said at least two consumers of said sample of consumer data comprise at least one of the following: one or more geographic attributes, one or more demographic attributes, one or more personal attributes, and one or more financial attributes.

9. A system for determining a personalized fusion score, said system comprising:

one or more memory storage areas; and
one or more computer processors that are configured to receive data stored in the one or more memory storage areas, wherein the one or more computer processors are configured for:

calculating preliminary fused scores for at least two consumers in a sample of consumer data, said sample of consumer data comprising at least two predictive scores for said at least two consumers in said sample of consumer data, and said preliminary fused scores being calculated at least in part by applying a first score fusion technique to said at least two predictive scores for said at least two consumers in said sample of consumer data;
calculating segmentation scores for said at least two consumers in said sample of consumer data, said segmentation scores being calculated based at least in part upon said preliminary fused scores;
creating a plurality of cluster subsets within said sample of consumer data based on said segmentation scores, each of the plurality of cluster subsets comprising at least one of said at least two consumers in said sample of consumer data;
determining an optimal score fusion technique for at least one of said plurality of cluster subsets, said optimal score fusion technique being determined independently from said first score fusion technique applied to said at least two predictive scores for said at least two consumers in said sample of consumer data;

and
calculating a personalized fusion score for at least one consumer in at least one of said plurality of cluster subsets, said personalized fusion score being calculated by applying said optimal fusion score technique to said at least two predictive scores for said at least one consumer in said at least one of said plurality of cluster subsets.

10. The method of claim 1 or system for determining a personalized fusion score of Claim 9, wherein the at least two predictive scores comprise at least one of a credit score, a bankruptcy score, and an affordability score.

11. The system for determining a personalized fusion score of Claim 9, wherein the processor is further configured, when creating the plurality of cluster subsets, to determine whether sufficiently distinct score mixes exists between at least two of the plurality of cluster subsets.

12. The system for determining a personalized fusion score of Claim 11, wherein the processor is further configured, when said sufficiently distinct score mixes do not exist, to redistribute one or more of the plurality of cluster subsets across said sample of consumer data.

13. The system for determining a personalized fusion score of Claim 9, wherein the processor is further configured, when creating the plurality of cluster subsets, to determine whether sufficiently distinct optimal score fusion techniques exist between at least two of the plurality of cluster subsets.

14. The system for determining a personalized fusion score of Claim 13, wherein the processor is further configured, when sufficiently distinct optimal score fusion techniques do not exist, to redistribute one or more of the plurality of cluster subsets across said sample of consumer data.

15. The system for determining a personalized fusion score of Claim 9, wherein the at least one computer processor is further configured to assess a performance rating of the personalized fusion score at least by comparing the personalized fusion score to an incumbent benchmark solution.

16. The system for determining a personalized fusion score of Claim 9, wherein the at least one computer processor is further configured, in calculating said segmentation scores for at least two consumers in a sample of consumer data, to:

retrieve additional attributes for said at least two consumers in said sample of consumer data; and
apply the first score fusion technique to the preliminary fused scores and the additional attributes for said at least two consumers in said sample of consumer data to calculate said segmentation scores for said at least two consumers in said sample of consumer data.

17. A computer program product comprising at least one non-transitory computer-readable storage medium having computer-readable program code portions embodied therein, the computer-readable program code portions comprising:

an executable portion configured for calculating preliminary fused scores for at least two consumers in a sample of consumer data, said sample of consumer data comprising at least two predictive scores for said at least two consumers in said sample of consumer data, and said preliminary fused scores being calculated at least in part by applying a first score fusion technique to said at least two predictive scores for said at least two consumers in said sample of consumer data;
an executable portion configured for calculating segmentation scores for said at least two consumers in said sample of consumer data, said segmentation scores being calculated based at least in part upon said preliminary fused scores;
an executable portion configured for creating a plurality of cluster subsets within said sample of consumer data based on said segmentation scores, each of the plurality of cluster subsets comprising at least one of said at least two consumers in said sample of consumer data;
an executable portion configured for determining an optimal score fusion technique for at least one of said plurality of cluster subsets, said optimal score fusion technique being determined independently from said first score fusion technique applied to said at least two predictive scores for said at least two consumers in said sample of consumer data; and
an executable portion configured for calculating a personalized fusion score for at least one consumer in at least one of said plurality of cluster subsets, said personalized fusion score being calculated by applying said optimal fusion score technique to said at least two predictive scores for said at least one consumer in said at least one of said plurality of cluster subsets.

18. The method of claim 1 or system of claim 9 or computer program product of Claim 17 wherein the executable portion configured for calculating score values for at least two consumers in a sample of consumer data is further configured for:

retrieving additional attributes for said at least two consumers in said sample of consumer data; and applying the first score fusion technique to the preliminary fused scores and the additional attributes for said at least two consumers in said sample of consumer data to calculate said segmentation scores for said at least two consumers in said sample of consumer data.

19. The method of Claim 1 or system of Claim 9 or computer program product of Claim 17, wherein said first score fusion technique is selected from the group consisting of: a gravitational fusion model, a displaced force fusion model, a regression model, a decision tree model, and a neural network model.

20. The method of Claim 1 or system of Claim 9 or computer program product of Claim 17, wherein the segmentation scores are further calculated based at least in part upon a plurality of additional attributes associated with said at least two consumers of said sample of consumer data.

21. The computer program product of Claim 17, wherein, when creating the plurality of cluster subsets, the executable portion is further configured to:

determine whether sufficiently distinct score mixes exists between at least two of the plurality of cluster subsets; and when said sufficiently distinct score mixes do not exist, to redistribute one or more of the plurality of cluster subsets across said sample of consumer data.

22. The computer program product of Claim 17, wherein, when creating the plurality of cluster subsets, the executable portion is further configured to:

determine whether sufficiently distinct optimal score fusion techniques exist between at least two of the plurality of cluster subsets; and when sufficiently distinct optimal score fusion techniques do not exist, to redistribute one or more of the plurality of cluster subsets across said sample of consumer data.

```
                                                    ┌─ 100
        ╭─────────────────────────╮
        │   Personalized Score    │
        │    Fusion Process       │
        ╰─────────────────────────╯
                     │
                     ▼
        ┌─────────────────────────┐        ┌─ 101
        │  Performing A Preliminary│
        │   Score Fusion for Each  │
        │        Consumer          │
        └─────────────────────────┘
                     │
                     ▼
        ┌─────────────────────────┐        ┌─ 102
        │  Calculating a Segmentation│
        │   Score for Each Consumer │
        └─────────────────────────┘
                     │
                     ▼
        ┌─────────────────────────┐        ┌─ 103
        │   Developing a Model to  │
        │ Create Optimal Segments/ │
        │        Clusters          │
        └─────────────────────────┘
                     │
                     ▼
        ┌─────────────────────────┐        ┌─ 104
        │   Identify a Score Fusion│
        │    Technique for Each    │
        │        Segment           │
        └─────────────────────────┘
                     │
                     ▼
        ┌─────────────────────────┐        ┌─ 105
        │  Outputting a Personalized│
        │   Fusion Score for Each  │
        │ Consumer in Each Segment │
        └─────────────────────────┘
```

*FIGURE 1*

Preliminary Consumer
Fusion & Segment Score
Calculation Process — 200

↓

Obtaining Scores for
Consumer — 201

↓

Performing Preliminary
Score Fusion for Consumer — 202

↓

Calculating a Preliminary
Fused Score — 203

↓

Obtaining
Additional Attributes — 204

↓

Calculating a Segmentation
Score for Consumer — 205

*FIGURE 2*

EP 2 610 811 A1

## Personalized Fusion Score System — 300

— 320 Program Storage

— 310

**MEMORY** — 310

312 — RAM

318 — Operating System

400 — Consumer Score Fusion Module

500 — Cluster Analysis Module

600 — Cluster Fusion Module

314 — ROM

316 — BIOS

330 — PROCESSOR

335 —

**Program Storage** — 320

318 — Operating System

400 — Consumer Score Fusion Module

500 — Cluster Analysis Module

600 — Cluster Fusion Module

DISPLAY/INPUT DEVICE — 350

NETWORK INTERFACE — 360

NETWORK — 370

REMOTE SYSTEM — 380

**FIGURE 3**

*FIGURE 4*

Consumer Score Fusion Module — 400

Initial Consumer Data — 410

Consumer Performance Analysis Tool 420

Data for Single Fusion Technique — 430

Consumer Score Fusion Tool 440

Additional Attribute Data — 450

Segmentation Score Tool 460

Cluster Analysis Module — 500

Segmentation Scores — 510

Cluster Creation Tool 520

Cluster Evaluation Tool 530

Cluster Fusion Module — 600

Optimal Cluster & Technique Data — 610

Data for Multiple Fusion Techniques — 620

Cluster Fusion Tool 630

Personalized Fusion Score (PFS) — 640

PFS Evaluation Tool 650

EP 2 610 811 A1

18

400 — Consumer Score
Fusion Module

401 — Obtain Scores for
Consumer

402 — Perform Preliminary Fusion
& Calculate Preliminary
Fused Score

403 — Obtain
Additional Attributes

404 — Calculate Segmentation
Score for Consumer

405 — Another Consumer?

YES

NO

406 — Transmit Segmentation
Score(s) to Cluster
Analysis Module

*FIGURE 5*

500 — Cluster Analysis Module

501 — Receive Segmentation Scores from Consumer Data Fusion Module

502 — Create Preliminary Cluster(s) for Evaluation

503 — Perform Cluster Evaluation

505 — Iteratively Revise Cluster(s)

504 — Same Score Mix or Optimal Technique within each Cluster?

NO

YES

506 — Finalize Cluster(s)

507 — Transmit Indication of Cluster(s) and Technique(s) to Cluster Data Fusion Module

*FIGURE 6*

600 — Cluster Fusion Module

601 — Receive Indication of Cluster(s) and Technique(s) from Cluster Analysis Module

602 — Perform Optimal Fusion Technique for Each Consumer in Each Cluster

603 — Output Personalized Fusion Score (PFS) For Each Consumer

## FIGURE 7

<table>
<tr><td>Europäisches Patentamt</td><td rowspan="3">**EUROPEAN SEARCH REPORT**</td><td>Application Number</td></tr>
<tr><td>European Patent Office</td><td rowspan="2">EP 12 19 9780</td></tr>
<tr><td>Office européen des brevets</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | EPO: "Notice from the European Patent Office dated 1 October 2007 concerning business methods", OFFICIAL JOURNAL OF THE EUROPEAN PATENT OFFICE, EPO, MUNCHEN, DE, vol. 30, no. 11, 1 November 2007 (2007-11-01), pages 592-593, XP007905525, ISSN: 0170-9291 * The claimed subject matter, with due regard to the description and drawings, relates to processes comprised in the list of subject matter and activities excluded from patentability under Art.52(2) and (3) EPC. The applicant is advised that in accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present application. The notoriety of such prior art cannot reasonably be contested. No documentary evidence was therefore considered required. *<br>----- | 1-22 | INV. G06Q40/02 |
|  |  |  | TECHNICAL FIELDS SEARCHED (IPC) |
|  |  |  | G06Q |

The present search report has been drawn up for all claims

| Place of search | Date of completion of the search | Examiner |
|---|---|---|
| The Hague | 4 April 2013 | De Smet, Michaël |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

**EP 2 610 811 A1**

### REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61581431 A
- US 61581502 A